# EUROPÄISCHE PATENTSCHRIFT

(11) **EP 0 491 157 B1**
(45) Veröffentlichungstag und Bekanntmachung des Hinweises auf die Patenterteilung: **26.01.1994**
(21) Anmeldenummer: 91119161.7
(22) Anmeldetag: 11.11.1991
(51) Int. Cl.: A22C 11/08, A22C 11/02

(54) **Füllmaschine für grossstückige Fleischteile**
Machine for stuffing large meat products
Machine à bourrer de larges pièces de viande

(30) Priorität: 19.12.1990 DE 4040696
(43) Veröffentlichungstag der Anmeldung: 24.06.1992
(73) Patentinhaber: Heinrich Frey Maschinenbau GmbH, D-89542 Herbrechtingen (DE)
(72) Erfinder: Frey, Albert, W-7922 Herbrechtingen (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 166 188
- EP-A- 0 171 849
- FR-A- 1 171 397
- US-A- 4 557 018
- US-A- 4 565 054
- US-A- 4 646 386

## Beschreibung

Die Erfindung betrifft eine Füllmaschine zum Befüllen einer schlauchförmigen Hülle, insbesondere eines Darmes mit Füllgut in Form von Fleischprodukten, bestehend aus
- einem Vorratsbottich mit einer Auslaßöffnung,
- einer über die Auslaßöffnung beschickbaren Fördervorrichtung,
- einer Haltevorrichtung für die Hülle bzw. den Darm,
- einer Trenneinheit und
- einer Verschließvorrichtung für die Hülle bzw. den Darm.

Bekannte Füllmaschinen der angegebenen Art, wie z.B. in FR-A-1171397 veröffentlicht und gemäß dem Oberbegriff des 1. Anspruchs, werden bei der Herstellung von Wurstwaren verwendet. Hierbei wird der Vorratsbottich mit Füllgut in Form pastöser Masse beschickt und dann über Zellenradförderer, Hubkolbenanordnungen u. dgl. zu einer Portionierstation transportiert.

Die Aufgabe der vorliegenden Erfindung besteht darin, eine Füllmaschine zu schaffen, die zum Befüllen schlauchförmiger Hüllen mit Füllgut in Form von großstückigen Fleisch- bzw. Schinkenteilen geeignet ist.

Diese Aufgabe wird erfindungsgemäß mit den kennzeichnenden Merkmalen des 1. Anspruchs dadurch gelöst, daß die Fördervorrichtung als aus einer Schnecke und einem Gehäuse bestehender, für die Aufnahme großstückiger Fleisch- bzw. Schinkenteile bestimmter Schneckenförderer ausgebildet ist, daß der Schneckenförderer einen Beschickungsabschnitt, einen Vorkompressionsabschnitt und einen mit einer Vakuumquelle verbundenen Entgasungsabschnitt aufweist, daß der Schneckenförderer zumindest im Bereich seines Vorkompressionsabschnitts aus einem rohrförmigen Gehäuse und einer darin drehbar gelagerten, mit ihrem Außendurchmesser dem Gehäuseinnendurchmesser zumindest im wesentlichen angepaßten Verdichterschnecke besteht, und daß der Vorkompressionsabschnitt in der Weise dimensioniert und ausgebildet ist, daß über die in diesem Abschnitt verdichteten Fleischteile eine zumindest im wesentlichen vakuumdichte Trennung von Entgasungsabschnitt und Beschickungsabschnitt erreicht ist.

Weitere Merkmale der Erfindung sind in den Unteransprüchen beschrieben.

Durch diese Ausgestaltung wird erreicht, daß die großstückigen Fleisch- bzw. Schinkenteile durch die Füllmaschine nicht zerkleinert und unerwünschte Lufteinschlüsse im fertigen Produkt vermieden werden, und daß aus den unregelmäßig geformten Fleisch- bzw. Schinkenteilen ein Produkt von durchgehend gleicher Querschnittsform geschaffen wird, das sich optimal zur gewichtsgenauen Portionierung, insbesondere mittels Slicern eignet.

Die Verdichtung der großstückigen Fleisch- bzw. Schinkenteile im Vorkompressionsabschnitt wird nach einer bevorzugten Ausführungsform der Erfindung dadurch erreicht, daß die Schneckenfächer im Bereich des Vorkompressionsabschnittes ein geringeres Volumen aufweisen als im Bereich des Beschickungsabschnittes. Diese Volumenverringerung der Schneckenfächer kann dadurch erreicht werden,
- daß die Schneckensteigung im Bereich des Vorkompressionsabschnittes verringert wird,
- daß der Durchmesser von Schnecke und Gehäuse im Bereich des Vorkompressionsabschnitts verringert wird,
- daß der Durchmesser der Schneckenwelle im Bereich des Vorkompressionsabschnitts vergrößert wird, oder
- daß mehrere der erwähnten Merkmale miteinander kombiniert werden.

Nach einer weiteren bevorzugten Ausführungsform der Erfindung wird das Volumen der Schneckenfächer im Bereich des auf den Vorkompressionsabschnitt folgenden Entgasungsabschnittes wieder vergrößert, um so eine Auflockerung der großstückigen Fleisch- bzw. Schinkenteile zu erreichen. Hierdurch wird ein vereinfachtes und gründlicheres Absaugen der zwischen Fleisch- bzw. Schinkenteilen befindlichen Luft im Bereich des Entgasungsabschnittes möglich.

Der Entgasungsabschnitt wird vorzugsweise von einer Vakuumkammer umschlossen, die in diesem Bereich mit dem Gehäuseinnenraum durch in der Gehäusewand vorgesehene Durchbrechungen in Verbindung steht. Diese Durchbrechungen können beispielsweise als Sieb oder Lochblech ausgelegt sein.

Eine weitere Möglichkeit bei der Ausgestaltung des Entgasungsabschnittes besteht darin, die Welle im Bereich des Entgasungsabschnittes als Hohlwelle auszubilden, und deren Innenraum mit einer Vakuumquelle zu verbinden. Die zwischen den Fleisch- bzw. Schinkenteilen befindliche Luft wird in diesem Fall durch in der Hohlwelle vorgesehene Durchbrechungen abgesaugt.

Weiterhin ist es möglich, die zwischen den Fleisch- bzw. Schinkenteilen befindliche Luft durch die in der Hohlwelle vorgesehenen Durchbrechungen und gleichzeitig durch die Durchbrechungen in der Gehäusewand abzusaugen.

Um einem Haftenbleiben der mittels des Schneckenförderers zu transportierenden Fleisch- bzw. Schinkenteilen an den Schneckenfächern zu vermeiden, wird die Gehäuseinnenseite nach einer weiteren bevorzugten Ausführungsform der Erfindung im Bereich der Fördervorrichtung so ausgestaltet, daß einer durch das Haften der Fleisch- bzw. Schinkenteile an den Schneckenfächern bewirkten Rotationsbewegung entgegengewirkt wird. Dies kann beispielsweise dadurch erreicht werden, daß für die Gehäuseinnenseite und für die Schnecke unterschiedliche Materialien gewählt werden, wobei dann zwischen den Fleisch- bzw. Schinkenstücken und dem Schneckenmaterial geringere Reibungskräfte wirken als zwischen den Fleisch- bzw. Schinkenstücken und den Material der Gehäuseinnenseite. Eine andere Möglichkeit besteht in der Anbringung von sich im wesentlichen in Richtung der Schneckenwelle erstreckenden Zügen an der Gehäuseinnenseite.

Diese Züge können nach einer weiteren bevorzugten Ausführungsform der Erfindung zur Bildung einer siebähnlichen Vorrichtung in der Gehäusewand im Bereich des Entgasungsabschnittes verwendet werden, indem sie vor den in der Gehäusewand vorhandenen Durchbrechungen vorbeigeführt werden.

Weiterhin können die Züge bei geeigneter Materialwahl dazu verwendet werden, die Schnecke des Schneckenförderers im Gehäuseinneren zu lagern.

Bei einer weiteren bevorzugten Ausführungsform der Erfindung wird die Schnecke antriebsseitig in einem Wellenlager und innerhalb des Gehäuses in an der Gehäuseinnenwand vorgesehenen und über deren Umfang verteilten Führungselementen gelagert. Vorzugsweise werden diese Führungselemente als ringförmige Kunststoffhülsen ausgebildet, die an ihren zur Förderrichtung senkrechten Stirnseiten abgeschrägt sind, um so einen einwandfreien Transport des Füllgutes zu gewährleisten. Durch diese Ausführungsform der Erfindung wird ein vollflächig freier Austrittsguerschnitt der Schnecke erreicht, wodurch sichergestellt wird, daß großstückige Fleischteile die Schnecke ungehindert verlassen können.

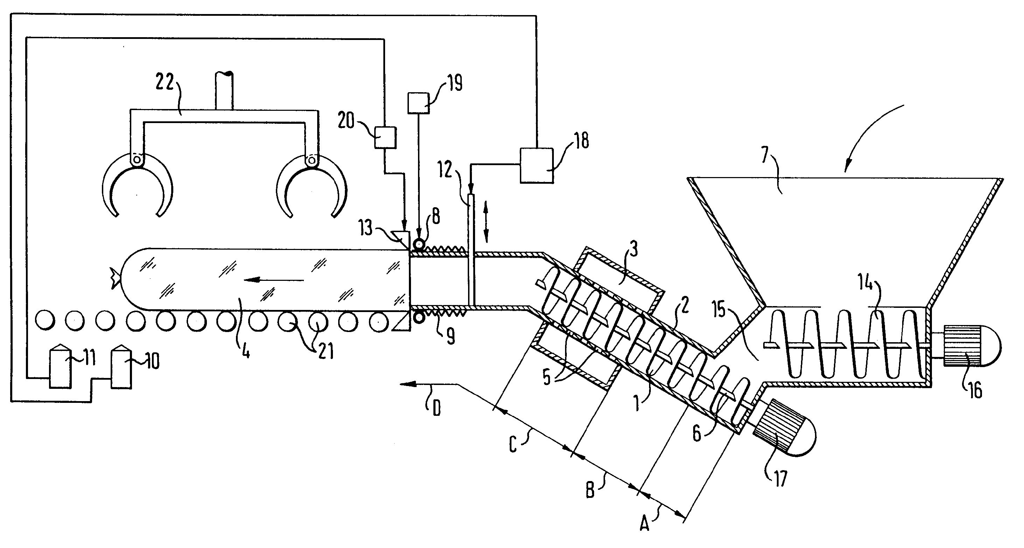

Ein Ausführungsbeispiel der erfindungsgemäßen Füllmaschine wird im folgenden anhand der einzigen Zeichnung beschrieben.

Diese Ausführungsform weist einen Vorratsbottich 7 auf, der in Pfeilrichtung mit großstückigen Fleisch- bzw. Schinkenteilen befüllt wird. Im Bodenbereich des Vorratsbottichs 7 befindet sich eine Zuführvorrichtung in Form einer Transportschnecke 14, die von einem Motor 16 angetrieben ist.

Über eine Auslaßöffnung 15 des Vorratsbottichs 7 werden die Schneckenfächer einer zu einem Schneckenförderer gehörenden Schnecke 1 beschickt. Die Schnecke 1 wird von einem Motor 17 angetrieben und ist in einem Gehäuse 2 gelagert. Der aus Schnecke 1, Gehäuse 2 und Motor 17 bestehende Schneckenförderer weist einen Beschickungsabschnitt A, einen Vorkompressionsabschnitt B und einen Entgasungsabschnitt C auf. Das Gehäuse 2 ist im Bereich des Entgasungsabschnittes C mit Durchbrechungen 5 versehen, über die der Gehäuseinnenraum in diesem Bereich mit einer Vakuumkammer 3 in Verbindung steht, die einen entsprechenden Bereich des Gehäuses 2 umschließt.

Auf den Entgasungsabschnitt C des Schneckenförderers folgt ein Kompressionsabschnitt D und eine Trennvorrichtung 12, welche als Schieber ausgebildet ist und von einer mit einem Sensor 10 in Verbindung stehenden Steuereinrichtung 18 in Pfeilrichtung betätigt werden kann.

Hinter der Trennvorrichtung ist die zu füllende Hülle bzw. der zu füllende Darm 9 auf das Gehäuse 2 aufgefädelt. In diesem Bereich ist eine Steuervorrichtung 8, 19, zum kontrollierten Abziehen der zu füllenden Hülle bzw. des zu füllenden Darmes 9 vorgesehen. Diese Steuervorrichtung weist hierbei einen sich ringförmig über den Außenumfang des Gehäuses 2 erstreckenden Schlauch 8 auf, wobei die abzuziehende Hülle bzw. der abzuziehende Darm 9 zwischen Schlauch 8 und Gehäuse 2 durchgeführt ist. Der Fülldruck des Schlauches ist über eine Steuereinheit 19 regelbar, wobei eine Vergrößerung des Fülldruckes einen stärkeren Druck des Schlauches 8 auf das Gehäuse 2 und somit auch auf die zwischen Schlauch 8 und Gehäuse 2 durchgeführte Hülle 9 bewirkt. Da mit der Vergrößerung des Fülldruckes des Schlauches 8 folglich ein Abziehen der zu füllenden Hülle 9 vom Gehäuse 2 erschwert wird, läßt sich so beim Füllen im Bereich des Kompressionsabschnitts D ein der Füllrichtung entgegengerichteter Druck aufbauen, der schließlich ein dicht und prall gefülltes Fleisch- bzw. Wurstprodukt gewährleistet.

Hinter der Trenneinheit befindet sich eine Verschließvorrichtung, die aus einer mechanischen Verschließeinheit 13 und einer mit einem Sensor 11 verbundenen Steuereinheit 20 besteht.

Auf die Verschließvorrichtung folgt eine Rollenbahn 21, auf der die gefüllte Hülle bzw. der gefüllte Darm 4 entlang bewegt wird. Über der Rollenbahn 21 befindet sich ein Greifer 22 zum Abnehmen des fertigen Wurst- bzw. Fleischprodukts von der Füllmaschine.

Beim Betrieb der erfindungsgemäßen Füllmaschine wird der Vorratsbottich 7 mit Füllgut in Form von großstückigem Fleisch- bzw. Schinkenteilen befüllt.

Die die beiden Schnecken 14 und 1 antreibenden Motoren 16 und 17 laufen kontinuierlich, wobei die Schnecke 14 das Füllgut aus dem Vorratsbottich 7 über die Auslaßöffnung 15 zum Beschickungsabschnitt A der Schnecke 1 transportiert. Vom Beschickungsabschnitt A gelangt das Füllgut zum Vorkompressionsabschnitt B der Schnecke 1, wo es in der Weise verdichtet wird, daß der Beschickungsabschnitt A von dem auf den Vorkompressionsabschnitt B folgenden Entgasungsabschnitt C im wesentlichen vakuumdicht abgetrennt wird.

Im Entgasungsabschnitt C wird die zwischen den einzelnen Teilen des Füllgutes befindliche Luft mittels der Vakuumkammer 3 durch die Durchbrechungen 5 in der Gehäusewand abgesaugt.

Anschließend wird das Füllgut im Bereich des Kompressionsabschnittes D verdichtet und anschließend an der Trenneinheit 12, 18, der Steuervorrichtung 8, 19 und der Verschließvorrichtung 13, 11, 20 vorbei in die Hülle 4 transportiert. Die das Abziehen der auf das Gehäuse 2 aufgefädelten Hülle 9 hemmende Steuervorrichtung 8, 19 bewirkt hierbei, daß die Hülle nur unter Aufwendung einer durch den Vorschub des Schneckenförderers hervorgerufenen und in Füllrichtung wirkenden Kraft abgezogen werden kann. Das Kräftezusammenspiel der Vorschubkraft und der ihr entgegen gerichteten, durch die Steuervorrichtung 8, 19 bewirkten Haltekraft gewährleisten, daß die einzelnen Teile des Füllgutes in der gefüllten Hülle 4 kompakt aneinander liegen und so eine pralle Füllung der Hülle erreicht wird.

Wenn das vordere Ende der gefüllten Hülle 4 den Sensor 10 erreicht, wird über die Steuervorrichtung 18 der Schieber 12 in das Gehäuse 2 hinein und anschließend wieder herausbewegt, um so das Füllgut einer zu füllenden Produkteinheit von der darauffolgenden abzutrennen. Wenn sich diese durch den Schieber 12 geschaffene Trennstelle während des kontinuierlich ablaufenden Füllvorgangs dann bis zur Verschließvorrichtung 11, 20, 13 bewegt hat, befindet sich das Ende der gefüllten Hülle 4 auf der Höhe des Sensors 11, der in der Folge über die Steuereinheit 20 die Verschließeinheit 13 betätigt. Dies ist möglich, da der Abstand zwischen dem Schieber 12 und der Verschließeinheit 13 gleich dem Abstand der beiden Sensoren 10 und 11 ist, wodurch sichergestellt ist, daß ein Verschließen der Hülle genau dann stattfindet, wenn sich die vom Schieber 12 geschaffene Trennstelle exakt auf der Höhe der Verschließeinheit 13 befindet.

Bei einem von der Verschließeinheit 13 durchgeführten Verschließvorgang wird sowohl das hintere Ende der Hülle einer fertig abgefüllten Produkteinheit als auch das vordere Ende der Hülle der folgenden noch zu füllenden Produkteinheit verschlossen.

Nach Beendigung eines Verschließvorgangs wird das fertige Produkt mittels eines Greifers 22 von der Rollenbahn 21 abgenommen.

## Patentansprüche

1. Füllmaschine zum Befüllen einer schlauchförmigen Hülle, insbesondere eines Darmes mit Füllgut in Form von Fleischprodukten, bestehend aus
- einem Vorratsbottich (7) mit einer Auslaßöffnung,
- einer über die Auslaßöffnung (15) beschickbaren Fördervorrichtung,
- einer Haltevorrichtung (8,19) für die Hülle bzw. den Darm,
- einer Trenneinheit (12) und
- einer Verschließvorrichtung (11,20,13) für die Hülle bzw. den Darm,
dadurch **gekennzeichnet**,
daß die Fördervorrichtung als aus nur einer Schnecke (1) und einem Gehäuse (2) bestehender, für die Aufnahme großstückiger Fleisch- bzw. Schinkenteile bestimmter Schneckenförderer ausgebildet ist,
daß der Schneckenförderer einen Beschickungsabschnitt (A), einen Vorkompressionsabschnitt (B) und einen mit einer Vakuumquelle (3) verbundenen Entgasungsabschnitt (C) aufweist,
daß der Schneckenförderer zumindest im Bereich seines Vorkompressionsabschnitts (B) aus einem rohrförmigen Gehäuse (2) und einer darin drehbar gelagerten, mit ihrem Außendurchmesser dem Gehäuseinnendurchmesser zumindest im wesentlichen angepaßten Verdichterschnecke (1) besteht, und
daß der Vorkompressionsabschnitt (B) in der Weise dimensioniert und ausgebildet ist, daß über die in diesem Abschnitt verdichteten Fleischteile eine zumindest im wesentlichen vakuumdichte Trennung von Entgasungsabschnitt (C) und Beschickungsabschnitt (A) erreicht ist.

2. Füllmaschine nach Anspruch 1,
dadurch **gekennzeichnet**,
daß die Schnecke (1) zur Erhöhung des Fülldruckes in Abhängigkeit vom Füllzustand der Hülle bzw. des Darmes (4) axial verschiebbar ist, und/oder
daß die Schneckenfächer im Bereich des Vorkompressionsabschnittes (B) ein geringeres Volumen aufweisen als im Bereich des Beschickungsabschnitts (A).

3. Füllmaschine nach einem der vorhergehenden Ansprüche,
dadurch **gekennzeichnet**,
daß die Schnecke (1) und deren Gehäuse eine zylindrische Form aufweisen und die Schnecke im Bereich des Vorkompressionsabschnitts (B) eine geringere Steigung besitzt als im Bereich des Beschickungsabschnitts (A), oder
daß die Schnecke (1) und deren Gehäuse eine zylindrische Form aufweisen und daß die Schnecke (1) über ihre gesamte Länge eine konstante Steigung besitzt, oder
daß die Schnecke (1) im Bereich des Vorkompressionsabschnitts (B) einen geringeren Durchmesser besitzt als im Bereich des Beschickungsabschnitts (A), wobei insbesondere die Schnecke (1) im Bereich des Vorkompressionsabschnitts (B) eine geringere Steigung und einen geringeren Durchmesser besitzt als im Bereich des Beschickungsabschnitts (A).

4. Füllmaschine nach einem der vorhergehenden Ansprüche,
dadurch **gekennzeichnet**,
daß im Bereich des Entgasungsabschnitts (C) in der Gehäusewand Durchbrechungen (5) vorgesehen sind, und daß der mit Durchbrechungen (5) versehene Teil des Gehäuses von einer Vakuumkammer (3) umschlossen ist, und/oder
daß die Welle (6) des Schneckenförderers zumindest im Bereich des Entgasungsabschnitts (C) als mit Durchbrechungen versehene Hohlwelle ausgebildet ist, deren Innenraum mit einer Vakuumquelle verbunden ist, wobei insbesondere die Schneckenfächer im Bereich des Entgasungsabschnitts (C) ein größeres Volumen aufweisen als im Bereich des Vorkompressionsabschnitts (B).

5. Füllmaschine nach einem der vorhergehenden Ansprüche,
dadurch **gekennzeichnet**,
daß die Entgasungseinrichtung mit einer Abscheidevorrichtung für Flüssigkeits- und Fleischreste ausgestattet ist, wobei insbesondere eine Rückführleitung von der Abscheidevorrichtung zum Vorratsbottich (7) vorgesehen ist.

6. Füllmaschine nach einem der vorhergehenden Ansprüche,
dadurch **gekennzeichnet**,
daß die Umdrehungsgeschwindigkeit der Schnecke (1) stufenlos regelbar ist, und/oder
daß die Schnecke in einem antriebsseitig vorgesehenen Wellenlager gelagert ist, und daß die Schnecke innerhalb des Gehäuses in an der Gehäuseinnenwand vorgesehenen, dieser in ihrer Form angepaßten und über deren Umfang verteilten Führungselementen gelagert ist, wobei sich die Führungselemente in Förderrichtung jeweils mindestens über die axiale Länge eines Schneckenfachs erstrecken.

7. Füllmaschine nach einem der vorhergehenden Ansprüche,
dadurch **gekennzeichnet**,
daß die auf den Entgasungsabschnitt (C) folgenden Schneckenfächer ein geringeres Volumen aufweisen, als die Schneckenfächer im Bereich des Entgasungsabschnittes (C), um so einer Rückwirkung des im Anschluß an die Entgasungsvorrichtung herrschenden Fülldruckes auf die Entgasungsvorrichtung entgegenzuwirken.

8. Füllmaschine nach einem der vorhergehenden Ansprüche,
dadurch **gekennzeichnet**,
daß die Haltevorrichtung für die auf das Gehäuse (2) aufgefädelte Hülle (9) bzw. den auf das Gehäuse (2) aufgefädelten Darm (9) eine Steuervorrichtung zum kontrollierten Abziehen der zu füllenden Hülle (9) bzw. des zu füllenden Darmes (9) aufweist, wobei insbesondere die Steuervorrichtung einen sich ringförmig über den Außenumfang des Gehäuses (2) erstreckenden Schlauch (8) mit steuerbarem Fülldruck aufweist, wobei die abzuziehende Hülle (9) bzw. der abzuziehende Darm (9) zwischen Schlauch (8) und Gehäuse (2) durchgeführt ist und durch die Steuerung des Fülldruckes das Volumen des Schlauches (8) und somit der Druck des Schlauches (8) auf die Hülle bzw. den Darm (9) kontrollierbar ist.

9. Füllmaschine nach einem der vorhergehenden Ansprüche,
dadurch **gekennzeichnet**,
daß ein erster Sensor (10) eine vorbestimmte erste Länge des gefüllten Darmes (4) detektiert und in der Folge die Trennvorrichtung (12) betätigt, und ein zweiter Sensor (11) eine vorbestimmte zweite Länge des gefüllten Darmes (4) detektiert und in der Folge die Verschließvorrichtung (13) für die Hülle bzw. den Darm (4) betätigt, wobei die Differenz zwischen der ersten kleineren und der zweiten größeren Länge im wesentlichen gleich dem Abstand zwischen Trenn- und Verschließvorrichtung ist, oder daß die Verschließvorrichtung (13) gleichzeitig als Trenneinheit verwendet ist.

10. Füllmaschine nach einem der vorhergehenden Ansprüche,
dadurch **gekennzeichnet**,
daß die Gehäuseinnenseite im Bereich der Fördervorrichtung so ausgestaltet ist, daß einer Rotationsbewegung der zu transportierenden Fleischstücke entgegengewirkt und die Bewegung der Fleischstücke in Transportrichtung gefördert wird, wobei insbesondere zwischen Gehäuseinnenseite im Bereich der Fördervorrichtung und den zu transportierenden Fleischstücken eine größere Reibungskraft wirkt als zwischen der Schnecke (1) und den Fleischstücken, wobei insbesondere an der Gehäuseinnenseite Züge angebracht sind, die gerade oder wendelförmig ausgebildet sind, wobei sie Unterbrechungen aufweisen oder durchgehend sind und insbesondere im Bereich des Entgasungsabschnitts (C) gehäuseinnenseitig vor Durchbrechungen in der Gehäusewand vorbeigeführt sind, wodurch eine siebähnliche Vorrichtung entsteht.

11. Füllmaschine nach einem der vorhergehenden Ansprüche,
dadurch **gekennzeichnet**,
daß im Bodenbereich des Vorratsbottichs (7) eine Zuführvorrichtung (14), insbesondere in Form einer Transportschnecke vorgesehen ist, die über die Auslaßöffnung (15) des Vorratsbottichs (7) den Beschickungsabschnitt (A) des Schneckenförderers speist, wobei zwischen der Transportschnecke (14) und dem Schneckenförderer ein Abweiser angebracht ist, der ein Überfüllen eines Schneckenfachs des Schneckenförderers verhindert.

## Claims

1. Filling machine for the filling of a hose-like sleeve, in particular of a gut with filling material in the form of meat products, comprising
- a supply vat (7) with an outlet opening,
- a conveying device chargeable via the outlet opening (15),
- a holding device (8, 19) for the sleeve or gut,
- a separating unit (12), and
- a closing device (11, 20, 13) for the sleeve or the gut,
characterized in that
the conveying device is formed as a screw conveyor intended for receiving coarse pieces of meat or ham parts and comprising only a screw (1) and a housing (2);
the screw conveyor has a charging section (A), a precompression section (B) and a degassification section (C) connected to a vacuum source (3);
the screw conveyor comprises, at least in the region of its precompression section (B), a tubular housing (2) and a compression screw (1) rotatably journalled therein with its outer diameter being at least substantially matched to the inner diameter of the housing; and
the precompression section (B) is dimensioned and formed in such a way that an at least substantially vacuum-tight separation of the degassification section (C) and the charging section (A) is achieved via the meat parts compressed in this section.

2. Filling machine in accordance with claim 1, characterized in that the screw (1) is axially displaceable for increasing of the filling pressure in dependence on the state of filling of the sleeve or gut (4) and/or in that the screw compartments have a smaller volume in the region of the precompression section (B) than in the region of the charging section (A).

3. Filling machine in accordance with one of the preceding claims, characterized in that the screw (1) and its housing have a cylindrical shape and the screw has a smaller pitch in the region of the precompression section (B) than in the region of the charging section (A), or in that the screw (1) and its housing have a cylindrical shape, and in that the screw (1) has a constant pitch over its entire length, or in that the screw (1) has a smaller diameter in the region of the precompression section (B) than in the region of the charging section (A), with, in particular, the screw (1) having both a smaller pitch and a smaller diameter in the region of the precompression section (B) than in the region of the charging section (A).

4. Filling machine in accordance with one of the preceding claims, characterized in that apertures (5) are provided in the housing wall in the region of the degassification section (C), and in that the part of the housing provided with apertures (5) is surrounded by a vacuum chamber (3) and/or in that the shaft (6) of the screw conveyor is formed, at least in the region of the degassification section (C), as a hollow shaft with apertures (23), the inner space of the hollow shaft being connected to a vacuum source (24), with, in particular, the screw compartments having a larger volume in the region of the degassification section (C) than in the region of the precompression section (B).

5. Filling machine in accordance with one of the preceding claims, characterized in that the degassification device is equipped with a separator for liquid and meat remnants, with, in particular, a return line (27) being provided from the separator to the supply vat (7).

6. Filling machine in accordance with one of the preceding claims, characterized in that the speed of rotation of the screw (1) is steplessly regulatable and/or in that the screw is journalled in a shaft bearing provided at the drive side; and in that the screw is journalled within the housing in guide elements which are provided at the inner wall of the housing, matched in their shape to the inner wall of the housing and distributed over the periphery of the inner wall of the housing, with the guide elements each extending in the conveyor direction at least over the axial length of one screw compartment.

7. Filling machine in accordance with one of the preceding claims, characterized in that the screw compartments following the degassification section (C) have a smaller volume than the screw compartments in the region of the degassification section (C) in order to thus counteract a back-action on the degassification device of the filling pressure prevailing at the connection to the degassification device.

8. Filling machine in accordance with one of the preceding claims, characterized in that the holding device for the sleeve (9) or gut (9) fitted onto the housing (2) has a control apparatus for the controlled withdrawal of the sleeve (9) or gut (9) which is to be filled, with, in particular, the control device having a hose (8) with controllable filling pressure which extends in a ring-shaped manner around the outer periphery of the housing (2), wherein the sleeve (9) or gut (9) to be withdrawn is guided between the hose (8) and the housing (2), and wherein the volume of the hose (8), and thus the pressure of the hose (8) on the sleeve or gut (9), is controllable by control of the filling pressure.

9. Filling machine in accordance with one of the preceding claims, characterized in that a first sensor (10) detects a predetermined first length of the filled gut (4) and as a consequence actuates the separating device (12); and in that a second sensor (11) detects a predetermined second length of the filled gut (4) and as a consequence actuates the closing device (13) for the sleeve or gut (4), wherein the difference between the first smaller and the second larger length is substantially equal to the distance between the separating device and the closing device; or in that the closing device (13) is simultaneously used as a separating unit.

10. Filling machine in accordance with one of the preceding claims, characterized in that the inner side of the housing in the region of the conveying device is so laid out that rotational movement of the pieces of meat to be transported is counteracted and the movement of the pieces of meat in the transport direction is promoted, with, in particular, a larger frictional force acting between the inner side of the housing in the region of the conveying device and the pieces of meat to be transported than acts between the screw (1) and the pieces of meat to be transported, with, in particular, positive or negative rifling being provided on the inner side of the housing which are formed straight or helically which have interruptions or are continuous, and which are lead past apertures in the housing wall, the rifling being at the inner side of the housing and in particular in the region of the degassification section (C), whereby a sieve-like device arises.

11. Filling machine in accordance with one of the preceding claims, characterized in that a supply device (14) is provided in the base region of the supply vat (7), in particular in the form of a transport screw, and feeds the charging section (A) of the screw conveyor via the discharge opening (15) of the supply vat (7), with a deflector being provided between the transport screw (14) and the screw conveyor, the deflector preventing an overfilling of a screw compartment of the screw conveyor.

## Revendications

1. Remplisseuse mécanique pour le bourrage, avec du produit de remplissage sous forme de produits carnés, d'une gaine en forme de tuyau souple, d'un boyau notamment, composée
- d'une cuve d'approvisionnement (7) comportant un orifice de sortie,
- d'un dispositif transporteur alimentable par l'intermédiaire de l'orifice de sortie (15),
- d'un dispositif de maintien (8,19) de la gaine ou du boyau,
- d'une unité de sectionnement (12) et
- d'un dispositif de fermeture (11,20,13) de la gaine ou du boyau,
**caractérisée**
en ce que le dispositif transporteur est un convoyeur à vis composé d'une vis sans fin (1) et d'une enveloppe (2) conçue pour recevoir des morceaux de viande ou de jambon grossiers, en ce que le convoyeur à vis présente une section d'alimentation (A), une section de précompression (B) et une section de dégazage (C) reliée à une source à vide (3),
en ce que le convoyeur à vis se compose, au minimum, dans le secteur de la section de précompression (B) d'une enveloppe tubulaire (2) et d'une vis de compactage (1), qui y est logée capable de tourner et dont, au moins pour l'essentiel, le diamètre extérieur est adapté au diamètre interne de l'enveloppe et
en ce que la section de précompression (B) est conçue et dimensionnée de manière à obtenir une séparation étanche au vide, au moins pour l'essentiel, entre la section de dégazage (C) et la section d'alimentation (A).

2. Remplisseuse mécanique selon la revendication 1,
**caractérisée**
en ce que la vis sans fin (1) est, pour augmenter la pression de remplissage, déplaçable axialement en fonction de l'état de remplissage de la gaine ou du boyau (4) et/ou en ce que les entrespires de la vis sans fin présentent, dans le secteur de la section de précompression (B), un volume plus réduit que dans le secteur de la section d'alimentation (A).

3. Remplisseuse mécanique selon l'une des revendications précédentes,
**caractérisée**
en ce que la vis sans fin (1) et son enveloppe présentent une forme cylindrique et que la vis sans fin possède dans le secteur de la section de précompression (B) un pas plus petit que dans le secteur de la section d'alimentation (A) ou en ce que la vis sans fin (1) et son enveloppe présentent une forme cylindrique et en ce que la vis sans fin (1) possède sur toute sa longueur un pas constant ou en ce que la vis sans fin (1) possède dans le secteur de la section de précompression (B) un diamètre plus petit que dans le secteur de la section d'alimentation (A), la vis sans fin (1) possédant notamment dans le secteur de la section de précompression (B) un pas plus petit et un diamètre plus petit que dans le secteur de la section d'alimentation (A).

4. Remplisseuse mécanique selon l'une des revendications précédentes
**caractérisée**
en ce que des découpures (5) sont, dans le secteur de la section de dégazage (C), prévues dans la paroi de l'enveloppe et en ce que la partie de l'enveloppe pourvue de ces découpures (5) est entourée par une chambre à vide (3) et/ou en ce que l'arbre (6) du transporteur à vis est, au moins dans le secteur de la section de dégazage (C), un arbre creux muni de découpures, arbre creux, dont l'espace intérieur est relié à une source à vide, les entrespires de la vis sans fin présentant notamment dans le secteur de la section de dégazage (C) un volume plus grand que dans le secteur de la section de précompression (B).

5. Remplisseuse mécanique selon l'une des revendications précédentes
**caractérisée**
en ce que le dispositif de dégazage est équipé d'un dispositif de séparation des restes de fluide et de viande, une canalisation de retour étant prévue allant du dispositif de séparation à la cuve d'approvisionnement (7).

6. Remplisseuse mécanique selon l'une des revendications précédentes,
**caractérisée**
en ce que la vitesse de rotation de la vis sans fin (1) est réglable en continu et/ou en ce que la vis sans fin est logée dans un palier d'arbre prévu du côté de la commande et en ce que la vis sans fin est logée à l'intérieur de l'enveloppe dans des éléments de guidage prévus sur la paroi interne de l'enveloppe, adaptés dans leur forme à celle-ci et répartis sur son pourtour, les éléments de guidage s'étendant en direction du transport respectivement au moins sur la longueur axiale d'une entrespire de la vis sans fin.

7. Remplisseuse mécanique selon l'une des revendications précédentes,
**caractérisée**
en ce que les entrespires de la vis sans fin qui succèdent à celles de la section de dégazage (C) présentent un volume plus faible que les entrespires de la vis sans fin dans le secteur de la section de dégazage (C), afin de s'opposer ainsi à une réaction sur le dispositif de dégazage de la pression de remplissage régnant après le dispositif de dégazage.

8. Remplisseuse mécanique selon l'une des revendications précédentes,
**caractérisée**
en ce que le dispositif de maintien présente un mécanisme de commande pour le retrait de la gaine (9) ou du boyau (9) à remplir, qui sont enfilés sur l'enveloppe (2), le mécanisme de commande présentant notamment un tuyau souple (8), dont la pression de remplissage est réglable, s'étendant annulairement sur le pourtour externe de l'enveloppe (2), tandis que la gaine à retirer (9) ou le boyau à retirer (9) sont passés entre le tuyau souple (8) et l'enveloppe (2) et que le volume du tuyau souple (8) et par conséquent la pression du tuyau souple (8) sur la gaine ou sur le boyau (9) peuvent être contrôlés par la commande de la pression de remplissage.

9. Remplisseuse mécanique selon l'une des revendications précédentes,
**caractérisée**
en ce qu'un premier détecteur (10) détecte une première longueur prédéfinie du boyau rempli (4) et actionne en conséquence le dispositif de sectionnement (12) et qu'un deuxième détecteur (11) détecte une deuxième longueur prédéfinie du boyau rempli (4) et actionne en conséquence le dispositif de fermeture (13) de la gaine ou du boyau (4), la différence entre la première longueur plus petite et la deuxième longueur plus grande étant essentiellement égale à la distance entre les dispositifs de sectionnement et de fermeture ou en ce que le dispositif de fermeture (13) est utilisé simultanément comme unité de sectionnement.

10. Remplisseuse mécanique selon l'une des revendications précédentes,
**caractérisée**
en ce que la face interne de l'enveloppe dans le secteur du dispositif transporteur est configurée de manière à s'opposer à un mouvement de rotation des morceaux de viande à transporter et à accélérer le mouvement des morceaux de viande dans la direction de transport, tandis qu'entre la face interne de l'enveloppe dans le secteur du dispositif transporteur et les morceaux de viande à transporter agit une force de frottement plus importante qu'entre la vis sans fin (1) et les morceaux de viande, cependant que des cordons rectilignes ou de forme hélicoïdale sont mis en place notamment sur la face interne de l'enveloppe et qu'ils présentent des discontinuités ou sont continus et qu'ils sont, notamment dans le secteur de la section de dégazage (C), côté intérieur de l'enveloppe, allongés devant les découpures de la paroi de l'enveloppe, d'où il en résulte un dispositif semblable à un crible.

11. Remplisseuse mécanique selon l'une des revendications précédentes,
**caractérisée**
en ce que, dans le secteur du fond de la cuve d'approvisionnement (7), est prévu un dispositif d'amenée (14), sous forme notamment d'une vis de transport, qui alimente par l'intermédiaire de l'orifice de sortie (15) de la cuve d'approvisionnement (7) la section d'alimentation (A) du convoyeur à vis, un débordoir, qui empêche une surcharge d'une entrespire de la vis sans fin du convoyeur à vis, étant mis en place entre la vis de transport (14) et le convoyeur à vis.
